Europäisches Patentamt

European Patent Office

Office européen des brevets

(19)

(11) Publication number: **0 088 426**
**B1**

(12) **EUROPEAN PATENT SPECIFICATION**

(45) Date of publication of patent specification: **18.06.86**

(51) Int. Cl.⁴: **B 23 B 27/04**

(21) Application number: **83102260.3**

(22) Date of filing: **08.03.83**

(54) **Cutting tool assembly.**

(30) Priority: **10.03.82 US 356833**

(43) Date of publication of application:
**14.09.83 Bulletin 83/37**

(45) Publication of the grant of the patent:
**18.06.86 Bulletin 86/25**

(84) Designated Contracting States:
**BE DE FR GB IT SE**

(56) References cited:
**DE-A-3 119 834**
**GB-A-1 430 780**
**US-A-3 599 303**
**US-A-3 780 408**
**US-A-3 785 021**
**US-A-4 001 925**
**US-A-4 195 956**

**TOOLING & PRODUCTION, vol. 44, no. 2, May
1978 Advertisement of Warner & Swasey's
division Manchester "Introducing a new
wrinkle in cutoff!"**

**WERKSTATT UND BETRIEB, vol. 111, no. 5,
1978, München R. WERTHEIM et al.
"Abstechwerkzeuge mit selbstklemmenden,
auswechselbaren Hartmetall-Schneidplatten",
pages 297-303**

(73) Proprietor: **KENNAMETAL INC.**
**One Lloyd Avenue P.O. Box 231**
**Latrobe Pennsylvania 15650 (US)**

(72) Inventor: **Armbrust, William D.**
**112 Coat Bridge Court**
**Cary North Carolina 27511 (US)**

(74) Representative: **Leiser, Gottfried, Dipl.-Ing. et al**
**Patentanwälte Prinz, Bunke & Partner**
**Ernsberger Strasse 19**
**D-8000 München 60 (DE)**

Courier Press, Leamington Spa, England.

## Description

### Field of the Invention

This invention relates to the field of cutting tools, such as those used for threading and grooving. More specifically, this invention has most direct application to cutoff tools and tool holders.

In the operation of the type of cutoff tooling with which this application is concerned, the cutoff tool is fed into a rotating workpiece. Due to the rotation and the forward movement of the tool, a groove is eventually cut into the workpiece. When the tool has been fed through the entire radius of the workpiece, a portion of the workpiece will have been cut off.

Cutoff tools are subject to considerable wear and abuse. To make the tool last longer, that part of the tool that contacts the workpiece is made from a hard wear resistant material. It would, of course, not be economical or practical to make the whole tool from hard wear resistant material. Often, the hard wear resistant material contacting the workpiece is in the form of a replaceable insert.

A complication to be considered in the design of the tool holder is that the forward portion of the tool holder, just behind the cutting insert, must be thinner than the insert so that it will not contact the workpiece as the insert moved into the material.

The invention of this application is most concerned with the particular arrangement for holding an insert in a tool holder.

Replaceable inserts and several types of holders therefore are known in the prior art. One type of holder is where a clamp and clamping plate are used to hold the insert in place. Exemplary of this type of holder is United States Patent No. 3,780,408, assigned to the present assignee.

Another type of holder is shown in United States Patent No. 207,003. In this patent, a cam operates to apply pressure so as to lock the cutting portion in place.

A third type is where the cutting portion is held in place by a wedging action, as shown, for example, in United States Patent No. 4,195,956.

In United States Patent No. 3,785,021, the insert is held by a resilient clamping arm.

It is an object of this invention to have a durable cutting tool with an easily replaceable insert.

It is also an object to have a tool holder that firmly holds the insert so that the insert will not wobble or move when it contacts the workpiece.

It is a further object to have an insert that is easily and quickly replaceable in the tool holder.

### Brief Summary of the Invention

According to the present invention, there is disclosed a cutting tool assembly having a hard, wear resistant insert, a shim and blade body. The blade body has a longitudinal axis. The shim has a rearwardly extending recess for receiving the insert, which rests against the rear portion of the shim recess. The shim recess tapers toward the open end of the shim recess to springingly hold the insert. The blade body has a downwardly and rearwardly extending recess on a first end for receiving the shim and insert. The blade body recess is also inclined to the longitudinal axis of the blade body. The blade body recess tapers toward the blade body to wedgingly hold the shim and insert.

When the insert, shim and blade are fully engaged, the rear peripheral edge of the shim and the rear portion of the blade body recess form a gap.

The shim may have a longitudinal slot extending rearward of the shim recess.

It is preferable that the shim have a land portion of reduced cross sectional thickness rearward of the rear portion of the shim recess. The land becomes the bottom of a notch formed when the shim recess receives the insert.

Preferably, the upper and lower peripheral edges of the insert are V-shaped and the upper and lower portions of the shim recess have V-shaped grooves. The V-shaped edges of the insert slidably engage the V-shaped grooves of the shim recess.

It is also preferable that the upper and lower peripheral edges of the shim are V-shaped and the upper and lower portions of the blade body recess have V-shaped grooves. The V-shaped edges of the shim slidably engage the V-shaped grooves of the blade body recess.

More preferably, the upper peripheral edge of the insert is comprised of a rear upper portion and a forward upper portion. The rear upper portion is downwardly inclined with respect to the forward upper portion. The insert also has a chip control slot with a width varying above its length. The slot extends upwardly and away from the forward cutting portion.

Even more preferably, the thickness of the insert in plan view is greatest at the cutting edge. The thickness of the insert is greater than the thickness of the shim and blade.

The blade body recess has a semi-circular portion at the juncture of the uper and rear portions of the blade body recess. The shim has a V-shaped notch at the juncture of the upper and rear peripheral edges of the shim. The semi-circular portion communicates with the V-shaped notch when the shim and insert are received by the blade recess.

The shim may have a chamfer at the juncture of the lower and rear peripheral edge of said shim.

In another embodiment of the blade body of the cutting tool assembly, the blade body has a recess on a second end. Preferably, the second blade body recess is oriented such that when the blade is turned end over end, the blade body recess of the second end will be in the same position formerly occupied by the blade body recess on the first end.

Preferably, the blade body is generally flat and bar-like and has a thickness when viewed in plan much less than the width when viewed from the side. The blade body will assume this shape whether there is a blade body recess on one end or both ends.

It is preferable also that the profile of the insert, shim and blade body, when fully engaged, is smooth and curvilinear above the cutting edge of the insert. Further, the profile of the insert, shim and blade, when fully engaged, is smooth and straight below the cutting edge of the insert.

According to the invention, there is also disclosed a shim and insert for use in a cutting tool assembly. The insert is a hard wear resistant insert and has a forward cutting portion, a seating portion directly opposed to the cutting portion, an upper peripheral edge and a lower peripheral edge. The shim has an upper arm of substantially uniform cross section and a rearwardly extending recess for receiving the insert. The recess has an upper portion, a lower portion and a rear portion. The upper and lower portions of the shim recess engage the upper and lower peripheral edges, respectively, of the insert with the recess tapering toward the open end of said recess to springingly hold the insert. When the shim and insert are fully engaged, the seating portion of the insert rests against the rear portion of the shim recess.

The shim may also have a longitudinal slot extending rearward of the shim recess.

It is preferable that the shim have a land portion of reduced cross sectional thickness rearward of the rear portion of the shim recess. The land becomes the bottom of a notch formed between the shim and the seating portion of the insert when the shim recess receives the insert.

Preferably, the upper and lower peripheral edges of the insert are V-shaped and the upper and lower portions of the shim recess have V-shaped grooves. The V-shaped edges of the insert slidably engage the V-shaped grooves of the shim recess.

Preferably, also, the shim has an upper, lower and rear peripheral edge. The upper and lower peripheral edges are V-shaped.

It is also preferable for the upper peripheral edge of the insert to be comprised of a rear upper portion adjacent to the seating portion and a forward upper portion adjacent to the forward cutting portion. The rear upper portion is downwardly inclined with respect to the forward upper portion. The insert may also have a chip control slot with a width varying along its length. The slot extends upwardly and away from the forward cutting portion.

More preferably, the shim has a V-shaped notch at the juncture of the upper and rear peripheral edges of shim. The shim may also have a chamber at the juncture of the lower and rear peripheral edges of the shim.

It is also preferable that the thickness of the insert in plan view is greatest at the cutting edge. The thickness of the insert is greater than the thickness of the shim.

Even more preferably, the profile of the insert and shim, when fully engaged, is smooth and curvilinear above the cutting edge of the insert. The profile of the insert and shim, when fully engaged, is smooth and straight below the cutting edge of the insert.

Brief Description of the Drawings

The exact nature of the present invention will become more clearly apparent upon reference to the following detailed specification taken in connection with the accompanying drawings in which:

Figure 1 is a perspective view of a cutoff tool assembly in a block.

Figure 2 is a side view of a fully assembled insert, shim and blade body.

Figure 3 is a frontal view of the insert, shim and blade body of Figure 2.

Figure 4 is a plan view of the insert, shim and blade body of Figure 2.

Figure 5 is an exploded view of an insert, shim and blade body.

Figure 6 is an enlarged view of a preferred embodiment of an insert.

Figure 7 is a view of the insert of Figure 6 looking in the direction of arrow VII in Figure 6.

Figure 8 is a sectional view of the insert of Figure 6 indicated by line VIII—VIII of Figure 7.

Figure 9 is a modification of the blade body of Figure 2.

Figure 10 is another modification of the blade body of Figure 2.

Detailed Description of the Invention

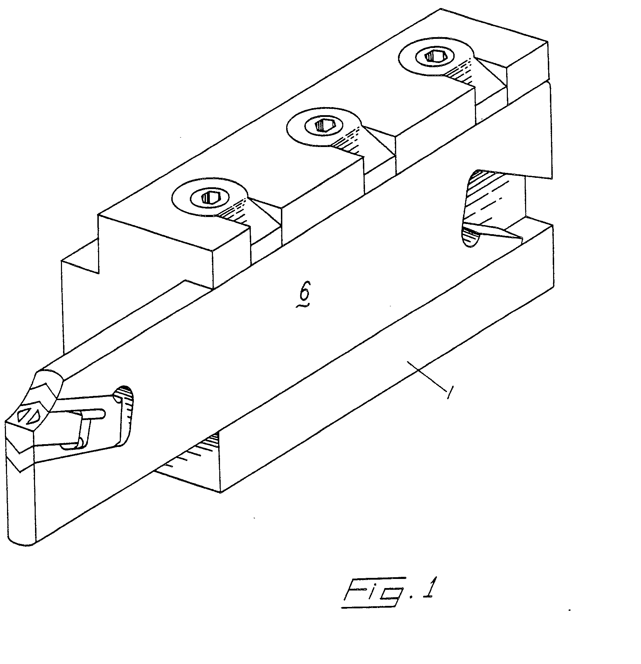

Referring now to the drawings in more detail, Figure 1 shows the assembled cutting tool assembly as it would normally appear ready for use. The blade body 6 is held in a suitable fixturing block 1, several types of which are well known in the prior art.

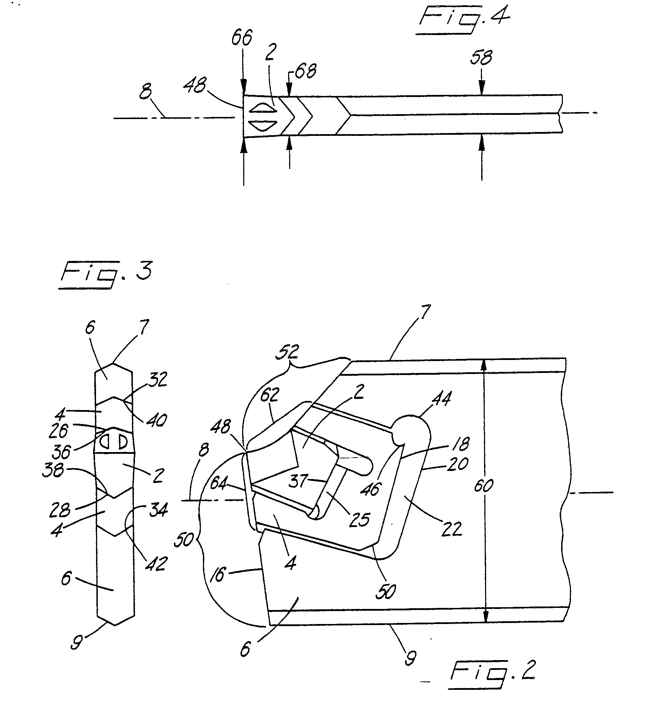

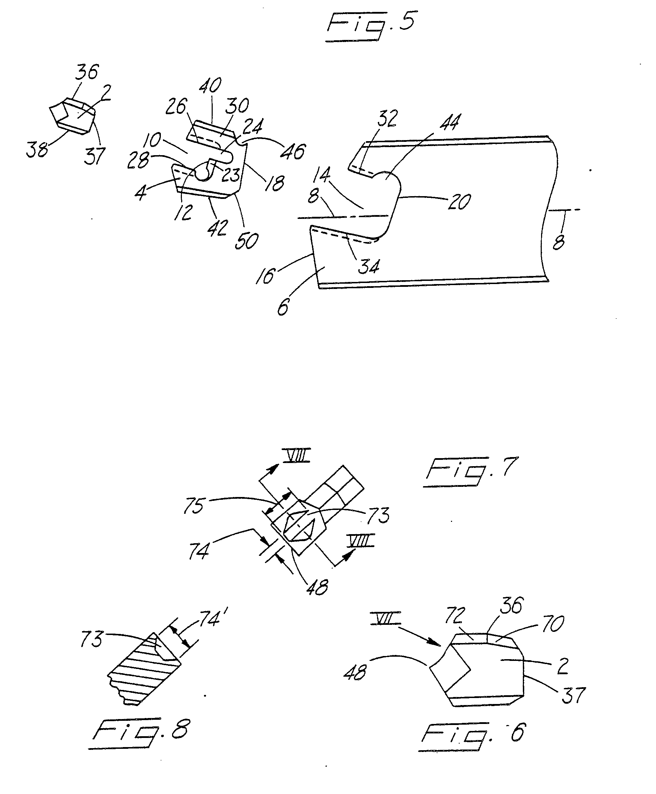

Figures 2 through 4 show the cutting tool assembly in greater detail. Figure 5 shows the assembly as it would appear disassembled.

According to the invention, the cutting tool assembly comprises a hard, wear resistant insert 2 having a forward cutting portion 48, a shim 4 and a blade body 6, having a longitudinal axis 8. As best seen in Figure 5, the shim 4 has a rearwardly extending recess 10 for receiving the insert 2. The insert rests against the rear portion 12 of the shim recess. The shim recess tapers toward the open end of the shim recess to springingly hold the insert. The blade body 6 has a downwardly and rearwardly extending recess 14 on a first end 16 for receiving the shim and insert. The blade body recess is also inclined to the longitudinal axis 8 of the blade body. The blade body recess tapers toward the blade body to wedgingly hold the shim and insert.

The rear peripheral edge 18 of the shim and the rear portion 20 of the blade body recess form a gap 22 when the insert, shim and blade body are fully engaged, as shown in Figure 2.

The shim may have a longitudinal slot 24 extending rearward of the shim recess. As will be described in more detail shortly, the slot is desirable for providing a certain amount of resiliency to the shim.

Preferably, as shown in Figure 5, the shim has a land portion 23 of reduced cross sectional thickness rearward of the rear portion 12 of the shim recess 10. As best seen in Figure 2, the land becomes the bottom of a notch 25 formed when the shim recess receives the insert. The purpose of this notch is indicated below.

Assembly of the cutting tool assembly is accomplished by first inserting the insert into the shim recess. The upper portion 26 and the lower portion 28 of the shim recess are not parallel but, instead, converge at some point forward of the shim recess. This causes the shim recess to taper toward the open end of the shim recess. As the open end of the shim recess is slightly smaller than the insert, the upper arm 30 of the shim must be somewhat resilient.

The longitudinal slot rearward of the shim recess operates to allow the upper arm to move up or down so as to provide the upper arm with some resiliency. Necessarily, the resiliency of the upper arm causes the insert to be springingly held in the shim recess. Removal of the insert can be done by inserting a screw driver or similar implement in the notch 25 of the shim and then twisting. This causes the resilient upper arm to move upward and the insert to move forward. Further twisting causes the insert to pop out of the shim recess.

The upper 32 and lower 34 portions of the blade body recess are nonparallel and converge at some point rearward of the blade body recess. Therefore, the blade body recess will taper inwardly. The final step in the assembly will then be accomplished by inserting the insert and shim into the blade body recess. Due to the fact that the blade body recess tapers inwardly, the insert and shim will be wedged into the blade body recess. As the cutting tool assembly is contacted with the workpiece, the insert and shim will be wedged further into the blade body recess, thereby increasing the positive retention of the insert and shim.

As best seen in Figure 3, the upper and lower peripheral edges of the insert are V-shaped and the upper and lower portions of the shim recess have V-shaped grooves. thus, as the shim recess receives the insert, the V-shaped edges of the insert slidably engage the V-shaped grooves of the shim recess.

In a preferred embodiment of an insert, Figure 6, the upper peripheral edge 36 of the insert 2 is comprised of a rear upper portion 70 and a forward upper portion 72. The rear upper portion is downwardly inclined with respect to the forward upper portion.

Referring now to Figures 7 and 8, the insert has a chip control slot 73 with a width 74 varying along its length 75. It is readily apparent that the width 74' of the slot at line VIII—VIII varies from the width 74. The slot extends upwardly and away from the forward cutting portion 48. The chip control slot has been found useful in controlling the configuration of the cut chip as it leaves the workpiece.

The blade body recess has a semi-circular portion 44 at the juncture of the upper and rear portions of the blade body recess. The shim has a V-shaped notch 46 at the juncture of the upper and rear peripheral edges of the shim. When the shim and insert are received by the blade recess, the semi-circular portion of the blade body recess communicates with the V-shaped notch of the shim.

In the assembly of the insert and shim and the blade body, the insert and shim would be placed in the blade body recess as previously described. However, assembly is aided by the V-shaped notch and the semi-circular portion. A screw driver blade or similar implement would be placed in the V-shaped notch. The screw driver blade would also make contact with the semi-circular portion. As the screw driver is twisted toward the front of the assembly, the insert and shim would be preloaded or wedged into the blade body. Subsequent contact with the workpiece would only increase the wedging action and, therefore, also increase the positive retention of the insert and shim.

The thickness of the insert in the plan view, Figure 4, is greatest at the forward cutting portion 48. The thickness at the forward cutting portion is greater than the thickness of the shim and blade. It is preferable for the thickness 66 of the forward cutting portion 48 to be greater than the shim 68 or blade thickness 58 so that when a groove is cut into the workpiece, the possibility of the shim or blade rubbing up against the walls of the groove during forward movement of the cutting tool assembly is eliminated.

Preferably, the shim has a chamfer 50 at the juncture of the lower and rear peripheral edges of the shim. The purpose of the chamfer is to avoid the possibility of the shim engaging the rear portion of the blade body recess before the insert and shim are sufficiently wedged into the blade body recess.

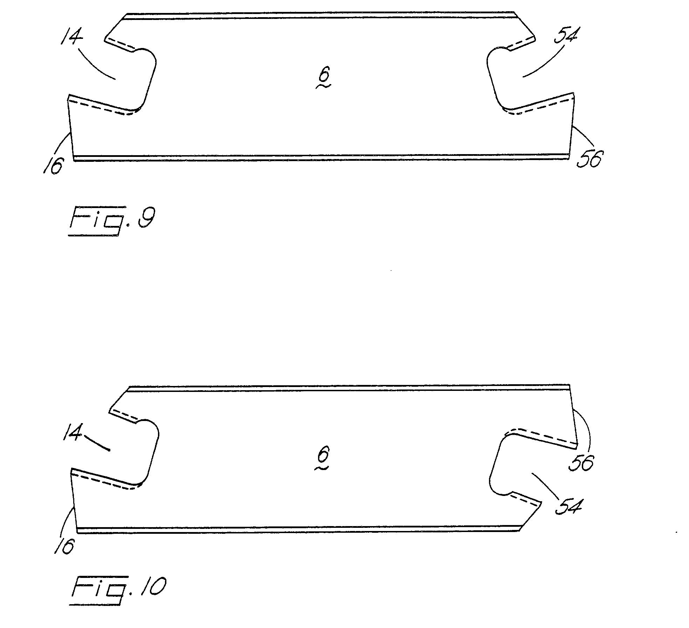

In another embodiment of the blade body of the cutting tool assembly, Figure 9, the blade body has a blade body recess 54 on a second end 56. In a preferred embodiment of the blade body, Figure 10, the second blade body recess is oriented such that when the blade body is turned end over end, the blade body recess 54 on the second end will be in the same position formerly occupied by the blade body recess 14 on the first end 16.

The blade body is generally flat and plate-like and has a thickness 58 when viewed in plan, Figure 4, much less than the width 60 when viewed from the side, Figure 2.

The edges of the body, 7 and 9, are shown in Figure 3 to be V-shaped, but the edges may also be rounded or flat, depending on the fixturing block used to retain the blade body.

When fully engaged, the profile 52 of the insert, shim and blade body is smooth and curvilinear above the forward cutting portion of the insert. When fully engaged, the profile 50 of the insert, shim and blade body is smooth and straight below the forward cutting portion of the insert.

After a period of use, the insert and shim will need to be removed from the blade body recess so that the insert can be replaced. If a screw driver or similar implement is placed in the gap 22, a prying action may be applied to the screw driver. This, in turn, will cause the insert and shim to be unwedged from the blade body recess. As discussed above, the insert may then be removed from the shim and replaced.

According to the invention, there is also a shim and insert, as a separate article of commerce, for use in a cutting tool assembly. A hard wear resistant insert 2 and a shim 4 comprise the assembly. The insert has a forward cutting portion 48, a seating portion 37 directly opposed to the cutting portion, an upper peripheral edge 36 and a lower peripheral edge 38. The shim has an upper arm 30 of substantially uniform cross section and a rearwardly extending recess 10 for receiving the insert. The recess has an upper portion 26, a lower portion 28 and a rear portion 12. The upper and lower portions of the shim recess engage the upper and lower peripheral edges, respectively, of the insert. The recess also tapers toward the open end of the recess to springingly hold the insert. When the shim and insert are fully engaged, the seating portion 37 of the insert rests against the rear portion 12 of the shim recess. The shim may also have a longitudinal slot 24 extending rearward of the shim recess.

As shown in Figure 5, it is preferable that the shim have a land portion 23 of reduced cross sectional thickness rearward of the rear portion 12 of the shim recess 10. As best seen in Figure 2, the land becomes the bottom of a notch 25 formed between the shim 4 and the seating portion 37 of the insert 2 when the shim recess receives the insert.

Preferably, the upper and lower peripheral edges of the insert are V-shaped and the upper and lower portions of the shim recess have V-shaped grooves. The V-shaped edges of the insert slidably engage the V-shaped grooves of the shim recess.

Preferably, also, the shim has an upper 40, lower 42 and rear 18 peripheral edge. Further, the upper and lower peripheral edges are V-shaped.

In a preferred embodiment of an insert, Figure 6, the upper peripheral edge 36 of the insert 2 is comprised of a rear upper portion 70 adjacent to the seating portion 37 and a forward upper portion 72 adjacent to the forward cutting portion 48. The rear upper portion is downwardly inclined with respect to the forward upper portion.

Referring now to Figures 7 and 8, the insert has a chip control slot 73 with a width 74 varying along its length 75. It is readily apparent that the width 74' of the slot at line VIII—VIII varies from the width 74. The slot extends upwardly and away from the forward cutting portion 48.

The shim also has a V-shaped notch 46 at the juncture of the upper and rear peripheral edges of the shim.

The thickness 66 of the insert in plan view, Figure 4, is greatest at the forward cutting portion 48. The forward cutting portion thickness is greater than the thickness 68 of the shim.

The shim may also have a chamfer 50 at the junction of the lower and rear peripheral edges of the shim.

When the shim and insert are fully engaged, the profile 62 of the shim and insert is smooth and curvilinear above the cutting edge of the insert. Below the cutting edge of the insert, the profile 64 of the fully engaged shim and insert is smooth and straight.

Modifications may be made within the scope of the appended claims.

## Claims

1. A cutting tool assembly comprising: a hard wear resistant insert having a forward cutting portion, a shim and a blade body having a longitudinal axis, said shim having a rearwardly extending recess for receiving said insert, said insert resting against the rear portion of said shim recess, said shim recess tapering toward the open end of said shim recess to springingly hold said insert, said blade body having a downwardly and rearwardly extending recess on a first end for receiving said shim and insert, said blade body recess also being inclined to said longitudinal axis of said blade body, said blade body recess tapering toward said blade body to wedgingly hold said shim and insert.

2. The cutting tool assembly in Claim 1 wherein the rear peripheral edge of said shim and the rear portion of said blade body recess form a gap when said insert, shim and blade body are fully engaged.

3. The cutting tool assembly in Claim 2 wherein said shim has a longitudinal slot extending rearward of said shim recess.

4. The cutting tool assembly in Claim 3 wherein said shim has a land portion of reduced cross sectional thickness rearward of rear portion of said shim recess, said land being the bottom of a notch formed when said shim recess receives said insert.

5. The cutting tool assembly in Claim 4 wherein the upper and lower peripheral edges of said insert are V-shaped and the upper and lower portions of said shim recess have V-shaped grooves, said V-shaped edges slidably engaging said V-shaped grooves.

6. The cutting tool assembly in Claim 5 wherein the upper and lower peripheral edges of said shim are V-shaped and the upper and lower portions of said blade body recess have V-shaped grooves, said V-shaped edges slidably engaging said V-shaped grooves.

7. The cutting tool assembly in Claim 6 wherein said upper peripheral edge of said insert is comprised of a rear upper portion and a forward upper portion, the rear upper portion being downwardly inclined with respect to the forward upper portion.

8. The cutting tool assembly in Claim 7 wherein said insert has a chip control slot with a width varying along its length, said slot extending upwardly and away from the forward cutting portion.

9. The cutting tool assembly in Claim 8 wherein said blade body recess has a semi-circular portion at the juncture of the upper and rear portions of said blade body recess and said shim has a V-shaped notch at the juncture of the upper and rear peripheral edges of said shim, said semi-circular portion communicating with said V-shaped notch when said shim and insert are received by said blade recess.

10. The cutting tool assembly in Claim 9 wherein the thickness of said insert in plan view is greatest at the forward cutting portion, said thickness being greater than the thickness of said shim and blade.

11. The cutting tool assembly in Claim 10 wherein said shim has a chamfer at the juncture of the lower and rear peripheral edges of said shim.

12. The cutting tool assembly in Claim 1 wherein said blade body has a blade body recess on a second end.

13. The cutting tool assembly in Claim 12 wherein when said blade body is turned end over end, the blade body recess on said second end will be in the same position formerly occupied by said blade body recess on said first end.

14. The cutting tool assembly in Claims 11 or 13 wherein said blade body is generally flat and plate-like and has a thickness when viewed in plan much less than the width when viewed from the side.

15. The cutting tool assembly as in Claim 1 wherein the profile of said insert, shim and blade body when fully engaged is smooth and curvilinear above the forward cutting portion of said insert.

16. The cutting tool assembly as in Claim 15 wherein the profile of said insert, shim and blade when fully engaged is smooth and straight below the forward cutting portion of said insert.

17. A shim and insert for use in a cutting tool assembly comprising: a hard wear resistant insert and a shim, said insert having a forward cutting portion, a seating portion directly opposed to said cutting portion, an upper peripheral edge and a lower peripheral edge; said shim having an upper arm of substantially uniform cross section and a rearwardly extending recess for receiving said insert, said recess having an upper portion, a lower portion and a rear portion; the upper and lower portions of said shim recess engaging the upper and lower peripheral edges, respectively, of said insert, said recess tapering toward the open end of said recess to springingly hold said insert, and when said shim and insert are fully engaged, the seating portion of said insert rests against the rear portion of said shim recess.

18. The shim and insert of Claim 17 wherein said shim has a longitudinal slot extending rearward of said shim recess.

19. The shim and insert of Claim 18 wherein said shim has a land portion of reduced cross sectional thickness rearward of said rear portion of said shim recess, said land being the bottom of a notch formed between said shim and said seating portion of said insert when said shim recess receives said insert.

20. The shim and insert of Claim 19 wherein the upper and lower peripheral edges of said insert are V-shaped and the upper and lower portions of said shim recess have V-shaped grooves, said V-shaped edges slidably engaging said V-shaped grooves.

21. The shim and insert of Claim 20 wherein said shim has an upper, lower and rear peripheral edge, said upper and lower peripheral edges being V-shaped.

22. The shim and insert of Claim 21 wherein said upper peripheral edge of said insert is comprised of a rear upper portion adjacent to the seating portion and a forward upper portion adjacent to the forward cutting portion, the rear upper portion being downwardly inclined with respect to the forward upper portion.

23. The shim and insert of Claim 22 wherein said insert has a chip control slot with a width varying along its length, said slot extending upwardly and away from the forward cutting portion.

24. The shim and insert of Claim 23 wherein said shim has a V-shaped notch at the juncture of the upper and rear peripheral edges of said shim.

25. The shim and insert of Claim 24 wherein the thickness of said insert in plan view is greatest at the forward cutting portion, said thickness being greater than the thickness of said shim.

26. The shim and insert of Claim 25 wherein said shim has a chamfer at the juncture of the lower and rear peripheral edges of said shim.

27. The shim and insert of Claim 26 wherein the profile of said insert and shim when fully engaged is smooth and curvilinear above the forward cutting portion of said insert.

28. The shim and insert of Claim 27 wherein the profile of said insert and shim when fully engaged is smooth and straight below the forward cutting portion of said insert.

**Revendications**

1. Outil de coupe comprenant: une plaquette de coupe dure, résistant à l'usure, présentant une partie avant coupante, une cale et un corps d'outil d'axe longitudinal, cette cale présentant un évidement s'étendant vers l'arrière pour recevoir ladite plaquette, celle-ci reposant contre la partie arrière du dit évidement, ce dernier allant en se rétrécissant vers son extrémité ouverte pour maintenir élastiquement ladite plaquette, ledit corps présentant, à une première extrémité, un évidement s'étendant vers le bas et vers l'arrière pour recevoir lesdite scale et plaquette, évidement qui est également incliné sur l'axe longitudinal du corps et qui va en se rétrécissant vers son orifice pour maintenir par coïncement lesdites cale et plaquette.

2. Outil de coupe selon la revendication 1, dans lequel le bord périphérique arrière de ladite cale et la partie arrière dudit évidement du corps forment un interstice lorsque la plaquette, la cale et le corps sont complètement engagés les uns dans les autres.

3. Outil de coupe selon la revendication 2, dans lequel la cale présente une fente longitudinale s'étendant vers l'arrière de l'évidement de cale.

4. Outil de coupe selon la revendication 3, dans lequel ladite cale présente, à arrière de ladite partie arrière de cette cale, une facette d'épaisseur de section réduite, facette que est le fond d'une encoche formée quand l'evidement de cale reçoit la plaquette.

5. Outil de coupe selon la revendication 4, dans lequel les bords périphériques supérieur et inférieur de ladite plaquette sont en forme de V et les parties supérieure et inférieure de l'évidement de cale présentent des rainures en V, lesdits bords en V s'engageant en coulissant dans lesdites rainures en V.

6. Outil de coupe selon la revendication 5, dans lequel les bords périphériques supérieur et inférieur de la cale sont en forme de V et les parties supérieure et inférieure de l'évidement de corps présentent des rainures en V, lesdits bords en V s'engageant en coulissant dans lesdites rainures en V.

7. Outil de coupe selon la revendication 6, dans lequel ledit bord périphérique supérieur de la plaquette est constitué d'une partie supérieure arrière et d'une partie supérieure avant, la partie arrière étant inclinée vers le bas par rapport à la partie avant.

8. Outil de coupe selon la revendication 7, dans lequel ladite plaquette présente une fente de commande du copeau, d'une largeur variant sur la longueur, cette fente s'étendant vers le haut et s'écartant de la partie coupante avant.

9. Outil de coupe selon la revendication 8, dans lequel l'évidement de corps comporte une partie semi-circulaire à la jonction des parties supérieure et arrière de l'évidement de corps et la cale présente une encoche en V à la jonction de ses bords périphériques supérieur et arrière, cette partie semi-circulaire communiquant avec cette encoche en V quand la cale et la plaquette sont reçues dans l'évidement de corps.

10. Outil de coupe selon la revendication 9, dans lequel l'épaisseur de la plaquette, vue en plan, est la plus grande à la partie de coupe avant, cette épaisseur étant supérieure à celle desdits cale et corps.

11. Outil de coupe selon la revendication 10, dans lequel ladite cale présente un chanfrein à la jonction de ses bords périphériques inférieur et arrière.

12. Outil de coupe selon la revendication 1, dans lequel le corps d'outil présente un évidement à une seconde extrémité.

13. Outil de coupe selon la revendication 12, dans lequel, si on retourne bout-à-bout ledit corps, l'évidement de corps à cette seconde extrémité se trouvera dans la même position que celle occupée précédemment par l'évidement de corps à la première extrémité.

14. Outil selon les revendications 11 ou 13, dans lequel le corps d'outil est de forme générale plate et ressemble à une plaque et a une épaisseur, quand il est vu en plan, beaucoup plus petite que sa largeur quand il est vu de côté.

15. Outil de coupe selon la revendication 1, dans lequel le profil de la plaquette, cale et corps, quand ils sont complètement engagés les uns dans les autres, est lisse et curviligne au-dessus de la partie coupante avant de la plaquette.

16. Outil de coupe selon la revendication 15, dans lequel le profil de la plaquette, cale et corps, quand ils sont complètement engagés les uns dans les autres, est lisse et droit au-dessous de la partie coupante avant de la plaquette.

17. Cale et plaquette pour outil de coupe, comprenant: une plaquette dure, résistant à l'usure et une cale, ladite plaquette présentant une partie coupante avant, une partie de montage directement opposée à la partie coupante, un bord périphérique supérieur et un bord périphérique inférieur, cette cale ayant un bras supérieur de section sensiblement uniforme et un évidement s'étendant vers l'arrière pour recevoir cette plaquette, cet évidement présentant une partie supérieure, une partie inférieure et une partie arrière; lesdites parties supérieure et inférieure dudit évidement de cale venant en prise avec les bords périphériques supérieur et inférieur, respectivement, de la plaquette, cet évidement allant en se rétrécissant vers son extrémité ouverte pour retenir élastiquement la plaquette, et quand la cale et la plaquette sont complètement engagées l'une dans l'autre, la partie de montage de la plaquette repose contre la partie arrière de l'évidement de cale.

18. Cale et plaquette selon la revendication 17, dont la cale présente une fente longitudinale s'étendant vers l'arrière de l'évidement de cale.

19. Cale et plaquette selon la revendication 18, dont la cale présente, en arrière de la partie arrière de l'évidement de cale, une facette d'épaisseur de section réduite, cette facette étant le fond d'une encoche formée entre la cale et la partie de montage de la plaquette quand l'évidement de cale reçoit la plaquette.

20. Cale et plaquette selon la revendication 10, dont les bords périphériques supérieur et inférieur de la plaquette sont en forme de V et les parties supérieure et inférieure de l'évidement de cale présentent des rainures en V, ces bords en V s'engageant, en coulissant, dans lesdites rainures en V.

21. Cale et plaquette selon la revendication 20, dont ladite cale a un bord périphérique supérieur, inférieur et arrière, les bords supérieur et inférieur étant en forme de V.

22. Cale et plaquette selon la revendication 21, dont ledit bord périphérique supérieur de la plaquette est constitué d'une partie supérieure arrière adjacente à la partie de montage et d'une partie supérieure avant adjacente à la partie coupante avant, la partie supérieure arrière étant

7

inclinée vers le bas par rapport à la partie supérieure avant.

23. Cale et plaquette selon la revendication 22, dont ladite plaquette présente une fente de commande du copeau, d'une largeur variant sur la longueur, cette fente s'étendant vers le haut et s'écartant de la partie coupante avant.

24. Cale et plaquette selon la revendication 23, dont la cale présente une encoche en V à la jonction de ses bords périphériques supérieur et arrière.

25. Cale et plaquette selon la revendication 24, dont l'épaisseur de la plaquette, vue en plan, est la plus grande à la partie de coupe avant, cette épaisseur étant supérieure à celle de ladite cale.

26. Cale et plaquette selon la revendication 25, dont ladite cale présente un chanfrein à la jonction de ses bords périphériques inférieur et arrière.

27. Cale et plaquette selon la revendication 26, dont le profil de la plaquette et cale, quand ils sont complètement engagés l'un dans l'autre, est lisse et curviligne au-dessus de la partie coupante avant de la plaquette.

28. Cale et plaquette selon la revendication 27, dont le profil de la plaquette et cale, quand ils sont complètement engagés l'un dans l'autre, est lisse et droit au-dessous de la partie coupante avant de la plaquette.

**Patentansprüche**

1. Schneidwerkzeug-Baugruppe, enthaltend: Einen hochverschließfesten Einsatz mit einem vorderen Schneidteil, einem Unterlegstück und einem Messerkörper, der eine Längsachse aufweist, wobei das Unterlegstück eine sich rückseitig erstreckende Aussparung zur Aufnahme dieses Einsatzes aufweist, der Einsatz an dem rückwärtigen Teil der Aussparung des Unterlegstücks anliegt, die Aussparung des Unterlegstücks zum offenen Ende dieser Aussparung hin verjüngt ist, um den Einsatz federnd zu halten, der Messerkörper eine sich nach unten und nach hinten erstreckende Aussparung an einem ersten Ende zur Aufnahme des Unterlegstücks und des Einsatzes aufweist, die Aussparung des Messerkörpers ferner zur Längsachse des Messerkörpers geneigt ist und wobei die Aussparung des Messerkörpers zu dem Messerkörper hin verjüngt ist, um das Unterlegstück und den Einsatz keilartig zu halten.

2. Schneidwerkzeug-Baugruppe nach Anspruch 1, bei welcher der rückseitige Umfangsrand des Unterlegstücks und der rückwärtige Teil der Aussparung des Messerköpers einen Spalt bilden, wenn der Einsatz, das Unterlegstück und der Messerkörper vollständig in Eingriff sind.

3. Schneidwerkzeug-Baugruppe nach Anspruch 2, bei welcher das Unterlegstück einen Längsschlitz aufweist, der sich auf der Rückseite der Aussparung des Unterlegstücks erstreckt.

4. Schneidwerkzeug-Baugruppe nach Anspruch 3, bei welcher das Unterlegstück einen Stegteil mit verminderter Querschnittsdicke rückseitig von dem rückwärtigen Teil der Aussparung des Unterlegstücks aufweist, wobei dieser Steg der Boden einer Kerbe ist, die gebildet ist, wenn die Aussparung des Unterlegstücks den Einsatz aufnimmt.

5. Schneidwerkzeug-Baugruppe nach Anspruch 4, bei welcher der obere und der untere Umfangsrand des Einsatzes V-förmig sind und der obere und der untere Teil der Aussparung des Unterlegstücks V-förmige Nuten aufweisen, wobei die V-förmigen Ränder in Gleitkontakt mit den V-förmigen Nuten sind.

6. Schneidwerkzeug-Baugruppe nach Anspruch 5, bei welcher der obere und der untere Umfangsrand des Unterlegstücks V-förmig sind und der obere und untere Rand der Aussparung des Messerkörpers V-förmige Nuten aufweisen, wobei die V-förmigen Ränder in Gleitkontakt mit den V-förmigen Nuten sind.

7. Schneidwerkzeug-Baugruppe nach Anspruch 6, bei welcher der obere Umfangsrand des Einsatzes gebildet ist aus einem rückwärtigen oberen Teil und einem vorderseitigen oberen Teil, wobei der rückwärtige obere Teil in bezug auf den vorderseitigen oberen Teil nach unten geneigt ist.

8. Schneidwerkzeug-Baugruppe nach Anspruch 7, bei welcher der Einsatz einen Spankontrollschlitz mit einer Breite aufweist, die über seine Länge variiert, wobei dieser Schlitz sich nach oben und von dem vorderen Schneidteil fort erstreckt.

9. Schneidwerkzeug-Baugruppe nach Anspruch 8, bei welcher die Aussparung des Messerkörpers einen halbkreisförmigen Teil an der Verbindung des oberen mit dem rückwärtigen Teil der Aussparung des Messerkörpers aufweist und das Unterlegstück eine V-förmige Kerbe an der Vereinigung des oberen mit dem rückseitigen Umfangsrand des Unterlegstücks aufweist, wobei der halbkreisförmige Teil in Verbindung mit der V-förmigen Kerbe ist, wenn das Unterlegstück und der Einsatz in der Aussparung des Messers aufgenommen sind.

10. Schneidwerkzeug-Baugruppe nach Anspruch 9, bei welcher die Dicke des Einsatzes in Draufsicht am vorderseitigen Schneidteil am größten ist und diese Dicke größer ist als die Dicke des Unterlegstücks und des Messers.

11. Schneidwerkzeug-Baugruppe nach Anspruch 10, bei welcher das Unterlegstück eine Abschrägung an der Verbindung zwischen dem oberen und dem rückseitigen Umfangsrand des Unterlegstücks aufweist.

12. Schneidwerkzeug-Baugruppe nach Anspruch 1, bei welcher der Messerkörper eine Messerkörperaussparung an einem zweiten Ende umfaßt.

13. Schneidwerkzeug-Baugruppe nach Anspruch 12, bei welcher der Messerkörper Ende gegen Ende gewendet ist, wobei die Messerkörperaussparung an dem zweiten Ende sich in derselben Stellung befindet, die zuvor durch die Messerkörperaussparung an dem ersten Ende eingenommen wurde.

14. Schneidwerkzeug-Baugruppe nach Anspruch 11 oder 13, bei welcher der Messerkörper allgemein flach und plattenförmig ist und in Draufsicht betrachtet eine Dicke aufweist, die wesentlich geringer ist als die von der Seite gesehene Breite.

15. Schneidwerkzeug-Baugruppe nach Anspruch 1, bei welcher das Profil des Einsatzes, des Unterlegstücks und des Messerkörpers, wenn diese vollständig in Eingriff sind, glatt und kurvenförmig oberhalb des vorderseitigen Schneidteils des Einsatzes ist.

16. Schneidwerkzeug-Baugruppe nach Anspruch 15, bei welcher das Profil des Einsatzes, des Unterlegstücks und des Messers, wenn sie vollständig in Eingriff sind, glatt und geradförmig unterhalb des vorderen Schneidteils des Einsatzes ist.

17. Unterlegstück und Einsatz zur Verwendung in einer Schneidwerkzeug-Baugruppe, enthaltend: Einen hochverschleißfesten Einsatz und ein Unterlegstück, wobei der Einsatz einen vorderseitigen Schneidteil, einen diesem Schneidteil direkt gegenüberliegenden Sitzteil, einen oberen Umfangsrand und einen unteren Umfangsrand aufweist; wobei das Unterlegstück einen oberen Arm von im wesentlichen gleichförmigem Querschnitt und eine sich nach rückwärts erstreckende Aussparung zur Aufnahme des Einsatzes aufweist, wobei diese Aussparung einen oberen Teil, einen unteren Teil und einen rückwärtigen Teil besitzt; wobei der obere und der untere Teil der Aussparung des Unterlegstücks mit dem oberen bzw. unteren Umfangsrand des Einsatzes in Eingriff sind, wobei diese Aussparung zu dem offenen Ende der Aussparung hin verjüngt ist, um den Einsatz federnd zu halten, und der Sitzteil des Einsatzes, wenn das Unterlegstück und der Einsatz völlig in Eingriff sind, an dem rückwärtigen Teil der Aussparung des Unterlegstücks anliegt.

18. Unterlegstück und Einsatz nach Anspruch 17, bei welchen das Unterlegstück einen Längsschlitz aufweist, der sich rückseitig von der Aussparung des Unterlegstücks erstreckt.

19. Unterlegstück und Einsatz nach Anspruch 18, bei welchem das Unterlegstück einen Stegteil mit verminderter Querschnittsdicke rückseitig von dem rückwärtigen Teil der Aussparung des Unterlegstücks aufweist, wobei der Steg der Boden einer Kerbe ist, die zwischen dem Unterlegstück und dem Sitzteil des Einsatzes gebildet ist, wenn die Aussparung des Unterlegstücks den Einsatz aufnimmt.

20. Unterlegstück und Einsatz nach Anspruch 19, bei welchen der obere und untere Umfangsrand des Einsatzes V-förmig sind und der obere und der untere Teil der Aussparung des Unterlegstücks V-förmige Nuten aufweisen, wobei die V-förmigen Ränder in Gleiteingriff mit den V-förmigen Nuten sind.

21. Unterlegstück und Einsatz nach Anspruch 20, bei welchen das Unterlegstück einen oberen, einen unteren und einen rückwärtigen Umfangsrand aufweist und der obere und untere Umfangsrand V-förmig sind.

22. Unterlegstück und Einsatz nach Anspruch 21, bei welchen der obere Umfangsrand des Einsatzes gebildet ist aus einem rückwärtigen oberen Teil angrenzend an den Sitzteil und einem vorderen oberen Teil angrenzend an den vorderen Schneidteil, wobei der rückwärtige obere Teil bezüglich des vorderen oberen Teils nach unten geneigt ist.

23. Unterlegstück und Einsatz nach Anspruch 22, bei welchen der Einsatz einen Spankontrollschlitz aufweist, dessen Breite sich über seine Länge verändert und der sich nach oben und von dem vorderen Schneidteil fort erstreckt.

24. Unterlegstück und Einsatz nach Anspruch 23, bei welchen das Unterlegstück eine V-förmige Kerbe an der Verbindung des oberen Umfangsrandes mit dem rückseitigen Umfangsrand des Unterlegstücks aufweist.

25. Unterlegstück und Einsatz nach Anspruch 24, bei welchen die Dicke des Einsatzes in Draufsicht am vorderen Schneidteil am größten ist, wobei diese Dicke größer ist als die Dicke des Unterlegstücks.

26. Unterlegstück und Einsatz nach Anspruch 25, bei welchen das Unterlegstück eine Abschrägung an der Verbindung des oberen Umfangsrandes mit dem rückseitigen Umfangsrand des Unterlegstücks aufweist.

27. Unterlegstück und Einsatz nach Anspruch 26, bei welchen das Profil des Einsatzes und des Unterlegstücks, wenn sie vollständig in Eingriff sind, oberhalb des vorderen Schneidteils des Einsatzes glatt und gekrümmt ist.

28. Unterlegstück und Einsatz nach Anspruch 27, bei welchen das Profil des Einsatzes und des Unterlegstücks, wenn sie vollständig in Eingriff sind, unterhalb des vorderen Schneidteils des Einsatzes glatt und geradlinig ist.

*Fig.1*

0 088 426

*Fig.4*

*Fig.3*

*Fig.2*

2

# 0 088 426

_Fig.5_

_Fig.7_

_Fig.8_

_Fig. 6_

*Fig. 9*

*Fig. 10*